# EUROPÄISCHE PATENTANMELDUNG

(11) **EP 1 093 994 A2**
(43) Veröffentlichungstag der Anmeldung: **25.04.2001**
(21) Anmeldenummer: 00890307.2
(22) Anmeldetag: 11.10.2000
(51) Int. Cl.: B62D 25/12, E05F 15/00, E05F 15/02, E05F 15/04, F15B 11/08, G08B 21/00

(54) **Hydraulische Betätigungsanordung**

(30) Priorität: 18.10.1999 AT 175199
(71) Anmelder: Hoerbiger Hydraulik GmbH, 86956 Schongau (DE)
(72) Erfinder: Huber, Gerard, Dipl.-Ing, 87662 Frankenhofen (DE)
(74) Vertreter: Laminger, Norbert, Mag.

(57) **Zusammenfassung**

Bei einer hydraulischen Betätigungsanordnung sind die Arbeitsräume (3, 4) eines doppeltwirkenden Arbeitszylinders (1) über je ein gegenseitig entsperrbares Rückschlagventil (8, 9) mit je einer Seite einer umschaltbaren Druckmittelquelle (11) in Verbindung. Der jeweils unter Druck stehende der beiden Arbeitsräume (3, 4) ist mit einem gemeinsamen steuerbaren Proportional-Druckventil (15) zur Druckbegrenzung verbunden, welches ausgangsseitig über je ein in Richtung zu den Druckmittelleitungen (6, 7) zwischen den entsperrbaren Rückschlagventilen (8, 9) und dem jeweils zugehörigen Arbeitsraum (3, 4) des Arbeitszylinders (1) öffnendes Rückschlagventil (18, 19) mit den Druckmittelleitungen (6, 7) verbunden ist. Auf diese Weise kann der Systemdruck über das Proportionaldruckventil einfach gesteuert werden, wobei das abgesteuerte Druckmedium ausgangsseitig des Proportional-Druckventils (15) wieder unmittelbar in den Druckmittelkreis zur nachsaugenden Seite des Arbeitszylinders (1) rückgeführt wird, was eine einfache Anordnung und sichere Betätigung ermöglicht.

## Beschreibung

Die Erfindung betrifft eine hydraulische Betätigungsanordnung, insbesonders für Deckel, Türen, Verdecke und dergleichen an Fahrzeugen, mit zumindest einem doppeltwirkenden Arbeitszylinder, dessen Arbeitsräume über je ein gegenseitig entsperrbares Rückschlagventil mit je einer Seite einer umschaltbaren Druckmittelquelle in Verbindung stehen, wobei der jeweils unter Druck stehende Arbeitsraum mit einem steuerbaren Proportional-Druckventil zur Druckbegrenzung verbunden ist.

Bei einer beispielsweise aus der AT 405 749 B bekannten Anordnung der eingangs genannten Art steht der jeweils unter Druck stehende Arbeitsraum des Arbeitszylinders über ein automatisch schaltendes Umschaltventil mit der Eingangsseite des Proportional-Druckventils in Verbindung. Unter Zugrundelegung einer empirisch oder auf sonstig geeignete Weise ermittelten bzw. festgelegten Systemdruckkurve kann das Proportional-Druckventil so angesteuert werden, daß der Systemdruck jeweils nur knapp oberhalb des für die momentane Bewegungsphase erforderlichen Druckes liegt, was vielfältigste Vorteile bei derartigen Betätigungsanordnungen bietet.

Aufgabe der vorliegenden Erfindung ist es, eine Betätigungsanordnung der beschriebenen bekannten Art im Hinblick auf eine weitere Vereinfachung des konstruktiven Aufbaus zu verbessern.

Diese Aufgabe wird bei einer Betätigungsanordnung der eingangs genannten Art dadurch gelöst, daß das Proportional-Druckventil ausgangsseitig über je ein in Richtung zu den Druckmittelleitungen zwischen den entsperrbaren Rückschlagventilen und dem jeweils zugehörigen Arbeitsraum des Arbeitszylinders öffnendes Rückschlagventil mit diesen Druckmittelleitungen verbunden ist. Damit wird also im Gegensatz zu der beschriebenen bekannten Betätigungsanordnung hier nun das ausgangsseitig des Proportional-Druckventils abgesteuerte Hydraulikmedium unmittelbar in den Druckmittelkreis zum jeweils einsaugenden Arbeitsraum rückgeführt, was verschiedenste Vorteile bietet bzw. Verbesserungen des Verfahrensablaufes ermöglicht. So ist beispielsweise im Zusammenhang mit sogenannten Gleichgangzylindern, bei denen in jeder Bewegungsphase das auf der einen Seite ausgeschobene Hydraulikvolumen gleich dem auf der anderen Seite nachgesaugten ist, die Möglichkeit gegeben, prinzipiell ohne Volumenausgleich über den Tank zu arbeiten, was eine Verkleinerung der Betätigungsanordnung sowie eine Verringerung der erforderlichen Antriebsleistung ermöglicht, da das auf der einen Seite ausgeschobene und über das Proportional-Druckventil abgesteuerte Hydraulikmedium unmittelbar der anderen Seite wieder zugeführt werden kann. In der Praxis wird in den meisten Fällen allerdings trotzdem parallel zum Arbeitszylinder tankseitig ein Wechselventil oder dergleichen vorgesehen werden, um beispielsweise Gasblasen im Hydraulikmedium rasch entfernen und frisches Hydraulikmedium nachsaugen zu können.

Durch die bereits in der AT 405 749 B beschriebene Maßnahme, das den Systemdruck steuerbar begrenzende Proportional-Druckventil unter Berücksichtigung des jeweiligen Bewegungsablaufes des zu betätigenden Elementes anzusteuern, kann beispielsweise sehr einfach ein sanftes Anfahren oder aber ein entsprechendes Abbremsen des zu betätigenden Elementes sehr leicht realisiert werden. Bei der normalen hydraulischen Betätigung kann nach dem Stoppen der Pumpe das Proportional-Druckventil so angesteuert werden, daß ein Haltedruck in beiden Arbeitsräumen des Arbeitszylinders wirkt, der gerade ein sicheres Halten des zu betätigenden Elementes gewährleistet. Dieser Haltedruck kann auf den jeweiligen Anwendungsfalls abgestimmt und natürlich auch in verschiedenen Bewegungsstellungen des zu betätigenden Elementes verschieden groß sein.

Bei einer manuellen Betätigung des zu betätigenden Elementes fließt der auszuschiebende Volumenstrom von der einen Seite des Arbeitszylinders über das Proportional-Druckventil und das erwähnte Rückschlagventil in den gegenüberliegenden nachsaugenden Arbeitsraum, welcher damit sicher befüllt werden kann, ohne daß Luftpolster im Druckmedium auftreten könnten - das zu betätigende Element ist damit immer sicher und fest hydraulisch eingespannt. Der am Proportional-Druckventil z.B. von dessen Ansteuerung oder auch über eine entsprechende Vorspannung definierte Druck muß bei einer derartigen manuellen Betätigung vorerst überwunden werden (siehe oben "Haltedruck"). Nach dem Überdrücken dieses Haltedruckes kann beispielsweise über die Ansteuerung des Proportional-Druckventils oder auf unten noch besprochene Weise festgestellt werden, daß eine manuelle Bewegung des Arbeitszylinders eingeleitet worden ist, womit das Proportional-Druckventil seinerseits nun wieder so angesteuert werden kann, daß wenig oder kein Druck abfällt, womit die eingeleitete manuelle Betätigung ohne nennenswerte weitere Gegenkraft möglich ist. Nach abgeschlossener manueller Bewegung (wiederum feststellbar auf verschiedenste Weise) kann das Proportional-Druckventil wieder mit dem vorigen oder auch einem anderen Haltedruck angesteuert werden.

Soll das vom Arbeitszylinder zu betätigende Element schnell von Hand geöffnet werden, so kann zusätzlich beispielsweise über einen Schalter die Ansteuerung des Proportional-Druckventils unmittelbar so beeinflußt werden, daß die beiden Arbeitsräume des Arbeitszylinders auf oben beschriebene Weise praktisch widerstandslos verbunden sind, womit ein leichtes und schnelles manuelles Öffnen ohne nennenswerten Gegendruck möglich ist. Zur Beendung dieser Verstellungsmöglichkeit kann das Proportional-Druckventil wieder auf Haltedruck geschaltet werden, wobei dieses auch entsprechend verlaufend vonstatten gehen kann, womit sich eine sanfte Abbremsung des zu betätigenden Elementes leicht realisieren läßt.

Nach einer besonders bevorzugten Ausgestaltung der Erfindung ist vorgesehen, daß in der Verbindung der beiden Arbeitsräume des Arbeitszylinders mit dem Proportional-Druckventil jeweils ein von der jeweiligen Druckmittelleitung zum Eingang des Proportional-Druckventils öffnendes, vorgespanntes Rückschlagventil eingeschaltet ist. Dies ermöglicht eine konstruktiv einfache und funktionssichere Verbindung des jeweils unter Druck stehenden Arbeitsraumes mit den Proportional-Druckventil ohne das beim eingangs angesprochenen Stand der Technik zu diesem Zwecke vorgesehene separate Umschaltventil.

Nach einer weiteren bevorzugten Ausgestaltung der Erfindung kann das Druckniveau der beiden Arbeitsräume über zumindest einen Drucksensor überwacht werden, dessen Meßsignal über eine angeschlossene Steuervorrichtung zur Ansteuerung des Proportional-Druckventils dient. Über diesen arbeitsraumseitigen Drucksensor kann auf sehr einfache Weise eine Berücksichtigung des tatsächlichen Systemdruckes mit allen darin enthaltenen Informationen über den Bewegungsablauf, allfällige Hindernisse usw. erfolgen. So kann beispielsweise das Auftreten eines Hindernisses im Betätigungsweg über den entsprechenden Druckpuls im Systemsdruck erkannt und z.B. die Hydraulik abgeschaltet werden. Andererseits könnte durch sofortiges Öffnen des Proportional-Druckventils ein druckloser Umlauf ermöglicht werden. Weiters wäre es damit beispielsweise einer in den Verstellweg der Betätigungsanordnung geratenen Bedienungsperson sehr leicht ermöglicht, den Arbeitszylinder wieder zurückzuschieben und den Betätigungsweg wieder freizugeben. Dieser Drucksensor kann weiters auch zum Erkennen der oben bereits angesprochenen manuellen Betätigung des Arbeitszylinders verwendet werden, wobei beispielsweise das Überschreiten einer bestimmten Druckschwelle bei stehender Pumpe als Anzeichen für den Wunsch einer manuellen Betätigung genommen und danach das Proportional-Druckventil aufgesteuert werden könnte. Auch können über einen derartigen Drucksensor verschiedene Punkte der Betätigungsbewegung überwacht bzw. der weitere Ablauf der Betätigung bzw. auch der Ansteuerung des Proportional-Druckventil entsprechend koordiniert werden.

Der Drucksensor ist in vorteilhafter Ausgestaltung der Erfindung in bzw. an der gemeinsamen Zuleitung zum Proportional-Druckventil angeordnet, was die Verwendung eines einzelnen Drucksensors für beide Arbeitsräume des Arbeitszylinders ermöglicht - davon abgesehen wäre aber natürlich auch die Anordnung von zwei separaten Drucksensoren zur Überwachung der beiden Seiten des Arbeitszylinders möglich. Wie bereits oben angesprochen, könnte der Haltedruck aber auch unabhängig von einem separaten Drucksensor durch entsprechende (z.B. mechanische) Vorspannung des Proportional-Druckventils realisiert sein.

Nach einer anderen vorteilhaften weiteren Ausbildung der Erfindung ist am Arbeitszylinder ein Wegaufnehmer angeordnet, dessen Meßsignal der Steuereinrichtung zugeführt ist. Über diesen Wegaufnehmer, der in verschiedensten Zusammenhängen bei derartigen Betätigungsanordnungen oft beispielsweise zum Feststellen des Erreichens bestimmter Positionen, Endstellungen und dergleichen, ohnedies vorgesehen ist, läßt sich z.B. sehr leicht feststellen, ob bei stehender Pumpe manuell eine Betätigung über eine entsprechende Verschiebung des Kolbens des Arbeitszylinders eingeleitet wird, wonach auf oben beschriebene Weise dann die Ansteuerung des Proportional-Druckventils entsprechend beeinflußt werden kann.

Nach einer besonders bevorzugten Ausgestaltung der Erfindung ist vorgesehen, daß das Proportional-Druckventil stromlos geschlossen ist, was eine einfache Anordnung bzw. einen einfachen hydraulischen Kreis ermöglicht und oft auch aus Sicherheitsgründen durch die damit einhergehende Sperre der hydraulischen Betätigung (gegebenenfalls nur bis zum ,,Haltedruck") bevorzugt sein wird.

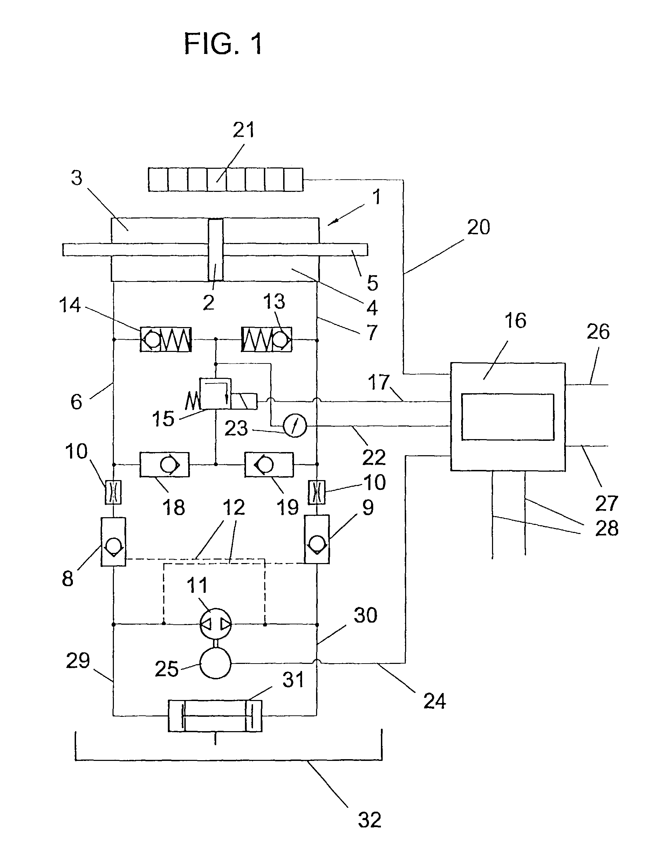

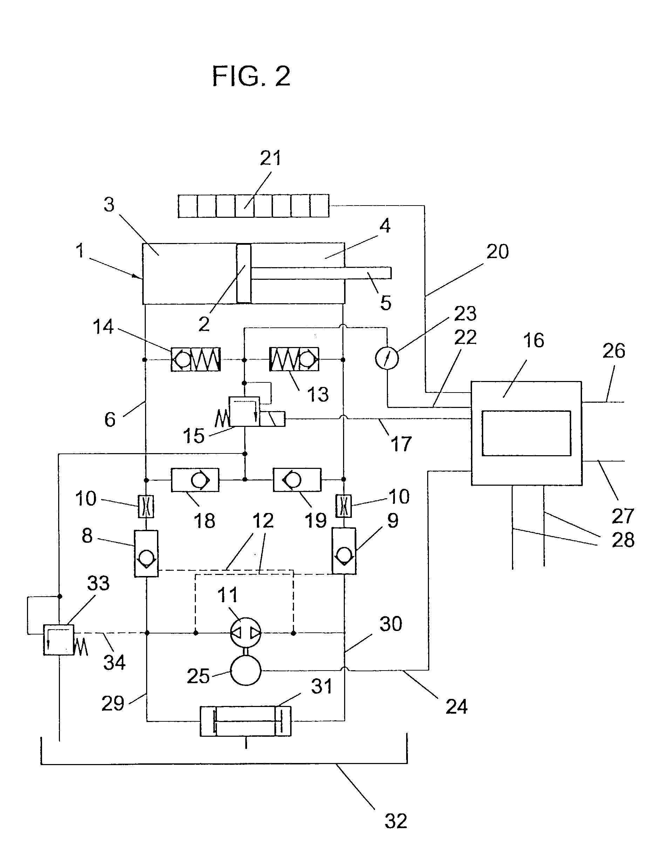

Die Erfindung wird im folgenden noch anhand der in der Zeichnung schematisch dargestellten Ausführungsbeispiele näher erläutert. Fig. 1 zeigt dabei den schematischen Schaltplan einer hydraulischen Betätigungseinrichtung nach der vorliegenden Erfindung mit Gleichgang-Arbeitszylinder und Fig. 2 ein entsprechendes Beispiel mit einem Arbeitszylinder mit einseitig herausgeführter Kolbenstange, der damit unterschiedliche Arbeitsvolumina auf beiden Seiten des Kolbens aufweist.

Der Arbeitszylinder 1 nach Fig. 1 weist auf beiden Seiten des Kolbens 2 Arbeitsräume 3, 4 auf, die hier zufolge der beidseitig herausgeführten Kolbenstange 5 so ausgebildet sind, daß das bei einer axialen Verstellung des Kolbens 2 auf der einen Seite ausgeschobene Volumen gleich groß dem auf der anderen Seite nachgesaugten Volumen an Hydraulikmedium ist. Die beiden Arbeitsräume 3, 4 sind über Druckmittelleitungen 6, 7 und Rückschlagventile 8, 9, denen hier Drosseln 10 vorgeschaltet sind, mit je einer Seite einer Pumpe 11 verbunden. Die Rückschlagventile 8, 9 sind über Leitungen 12 gegenseitig entsperrbar, sodaß im normalen hydraulischen Betrieb der Betätigungsanordnung eine einfache Umwälzung des Hydraulikmediums vom sich verkleinernden der Arbeitsräume 3, 4 über die Pumpe 11 zum sicher vergrößernden der Arbeitsräume 3, 4 erfolgen kann.

Über hier definiert vorgespannte Rückspannventile 13, 14 steht der jeweils unter Druck stehende Arbeitsraum 3, 4 mit einem steuerbaren Proportional-Druckventil 15 in Verbindung, welches von einer Steuereinrichtung 16 über eine Leitung 17 unter Zugrundelegung von beispielsweise empirisch ermittelten Verläufen des Systemdruckes ansteuerbar ist. Dieses Proportional-Druckventil 15 ist ausgangsseitig über je ein in Richtung zu den Druckmittelleitungen 6, 7 zwischen den entsperrbaren Rückschlagventilen 8, 9 und dem jeweils zugehörigen Arbeitsraum 3, 4 des Arbeitszylinders 1 öffnendes Rückschlagventil 18, 19 mit diesen Druckmittelleitungen 6, 7 verbunden. Das zur steuerbaren Druckbegrenzung im System dienende Proportional-Druckventil 15 wird damit stets nur in einer Richtung angeströmt und stellt sicher, daß in jeder Bewegungsphase der Betätigungsanordnung der Systemdruck nur knapp über dem Erforderlichen liegt, womit nur wenig Kraftüberschuß entsteht bzw. nur wenig unnötige Antriebsenergie erforderlich wird. Beim Auftreten eines Hindernisses im Betätigungsweg ist die auf das Hindernis ausgeübte Kraft dann entsprechend klein, was etwa Verletzungen einer Bedienungsperson ausschließt. Bei händischer Betätigung eines an der Kolbenstange 5 auf hier nicht dargestellte Weise angeschlossenen Elementes kann nach einem Überdrücken des vorgespannten Rückschlagventils 13 bzw. 14 und einem Überdrücken des am Proportional-Druckventil eingestellten Haltedruckes ein Überschieben von einem Arbeitsraum 3, 4 in den jeweils anderen erfolgen.

Die Steuereinrichtung 16 ist zusätzlich zur Leitung 17 zum Proportional-Druckventil 15 weiters noch über eine Leitung 20 mit einem Wegsensor 21 am Arbeitszylinder 1, über eine Leitung 22 mit einem eingangsseitig des Proportional-Druckventils 15 eingeschalteten Drucksensor 23 und über eine Leitung 24 mit dem Antriebsmotor der Pumpe 11 verbunden. Weiters sind auf der rechten Seite der Steuereinrichtung 16 noch Signalleitungen 26, 27 für die Einleitung eines gesteuerte Öffnens bzw. Schließens angedeutet. Die Leitungen 28 an der Unterseite der Steuereinrichtung 16 dienen deren Energieversorgung.

Parallel zum Arbeitszylinder 1 ist die Pumpe 11 noch über Leitungen 29, 30 mit einem Wechselventil 31 verbunden, das auf bekannte Weise mit dem Tank 32 kommuniziert. Im in Fig. 1 dargestellten Fall ist dieses Wechselventil 31 nur zur Erleichterung des Entfernens allenfalls im System auftretender Gasblasen erforderlich, da es zum Ausgleich der ohnedies auf beschriebene Weise symmetrischen Arbeitsvolumina nicht benötigt wird.

Bei der Einleitung einer manuellen Bewegung des Kolbens 2 des Arbeitszylinders 1 in der Darstellung gemäß Fig. 1 beispielsweise nach rechts wird Hydraulikmedium aus dem Arbeitsraum 4 ausgeschoben und gelangt über das vorgespannte Rückschlagventil 13 zum Proportional-Druckventil 15, welches hier stromlos geschlossen ist. Sobald der über den Drucksensor 23 festgestellte Druck eine einstellbare Schwelle (Haltedruck) übersteigt, wird über die Steuereinrichtung 16 und die Leitung 17 das Proportional-Druckventil 15 mit einem beliebig vorgebbaren zeitlichen Verlauf geöffnet, womit über das Rückschlagventil 18 und die Leitung 6 ein praktisch ungehindertes Überschieben in den Arbeitsraum 3 erfolgen kann. Anstelle des separaten Drucksensors könnte das Proportional-Druckventil 15 auch z.B. mechanisch vorgespannt und damit bis zum Erreichen des Haltedruckes geschlossen sein. Die Feststellung der manuellen Bewegung des Kolbens 2 kann entweder über den Drucksensor 23 oder aber auch über den Wegsensor 21 erfolgen. Sobald diese manuelle Verstellbewegung beendet wird, wird das Proportional-Druckventil 15 wieder geschlossen, womit der Kolben 2 sicher hydraulisch bis zum Haltedruck gehalten wird. Vor der Einleitung einer gewollten manuellen Verstellung könnte aber auch das Proportional-Druckventil 15 über die Leitung 17 aktiv freigeschaltet werden, was ebenfalls ein praktisch ungehindertes Überschieben von Hydraulikmedium ermöglicht.

Die Anordnung nach Fig. 2 unterscheidet sich von der nach Fig. 1 praktisch nur dadurch, daß hier nun im Zusammenhang mit einer nur einseitig aus dem Arbeitszylinder 1 herausgeführten Kolbenstange 5 - was unterschiedliche Volumensverhältnisse bzw. Volumsänderungen der Arbeitsräume 3, 4 ergibt - zur Berücksichtigung der damit auftretenden Notwendigkeit, anfallendes Mehrvolumen zum Tank 32 absteuern zu können bzw. von dort auch wieder zum nachsaugenden Arbeitsraum zurückbringen zu können, ein Druckbegrenzungsventil 33 an der Ausgangsseite des Proportional-Druckventils 15 eingeschaltet ist, welches zum Tank 32 hin absteuert und über eine Leitung 34 auch mit der Pumpe verbunden.

Im normalen hydraulischen Betrieb wird beim Ausfahren des Arbeitszylinders 1 (Kolbenstange 5 bewegt sich in der Darstellung nach rechts) über den Druck des in den Arbeitsraum 3 zugeführten Hydraulikmediums über die Leitung 34 das Druckbegrenzungsventil 33 aktiv zugesteuert. Bei der manuellen Betätigung des Arbeitszylinders 1 liegt über die Leitung 34 praktisch kein Druck an, sodaß das Druckbegrenzungsventil 33 auf übliche Weise dann anspricht, wenn die Hin- und Herbewegung des Kolbens in den volumsmäßig unterschiedlichen Arbeitsräumen 3 und 4 dies erfordert. Hier ist auch noch anzumerken, daß anstelle der dargestellten Abzweigung zum Druckbegrenzungsventil 33 nach dem Proportionaldruckventil 15 diese Abzweigung auch an entsprechender Stelle in der Leitung 6 zum Arbeitsraum 3 unmittelbar eingeschaltet sein könnte.

Das Nachsaugen bei einer Verstellung des Arbeitsyzlinders 1 gemäß Fig. 2 aus dem Tank 32 (erforderlich wegen der beschriebenen unterschiedlichen Arbeitsraumvolumina auf beiden Seiten des Kolbens 2) erfolgt entweder über das entsperrbare Rückschlagventil 8, die Leitung 29 und das Wechselventil 31 oder aber über die an sich bekannte Parallelanordnung eines geeigneten Nachsaugrückschlagventils.

## Patentansprüche

1. Hydraulische Betätigungsanordnung, insbesonders für Deckel, Türen, Verdecke und dergleichen an Fahrzeugen, mit zumindest einem doppeltwirkenden Arbeitszylinder (1), dessen Arbeitsräume (3, 4) über je ein gegenseitig entsperrbares Rückschlagventil (8, 9) mit je einer Seite einer umschaltbaren Druckmittelquelle (11) in Verbindung stehen, wobei der jeweils unter Druck stehende Arbeitsraum (3, 4) mit einem steuerbaren Proportional-Druckventil (15) zur Druckbegrenzung verbunden ist, **dadurch gekennzeichnet**, daß das Proportional-Druckventil (15) ausgangsseitig über je ein in Richtung zu den Druckmittelleitungen (6, 7) zwischen den entsperrbaren Rückschlagventilen (8, 9) und dem jeweils zugehörigen Arbeitsraum (3, 4) des Arbeitszylinders (1) öffnendes Rückschlagventil (18, 19) mit diesen Druckmittelleitungen (6, 7) verbunden ist.

2. Betätigungsanordnung nach Anspruch 1, dadurch gekennzeichnet, daß in der Verbindung der beiden Arbeitsräume (3, 4) des Arbeitszylinders (1) mit dem Proportional-Druckventil (15) jeweils ein von der jeweiligen Druckmittelleitung (6, 7) zum Eingang des Proportional-Druckventils (15) öffnendes vorgespanntes Rückschlagventil (13, 14) eingeschaltet ist.

3. Betätigungsanordnung nach Anspruch 1 oder 2, dadurch gekennzeichnet, daß das Druckniveau der beiden Arbeitsräume (3, 4) über zumindest einen Drucksensor (23) überwacht wird, dessen Meßsignal über eine angeschlossene Steuervorrichtung (16) zur Ansteuerung des Proportional-Druckventils (15) dient.

4. Betätigungsanordnung nach Anspruch 3, dadurch gekennzeichnet, daß der Drucksensor (23) in bzw. an der gemeinsamen Zuleitung zum Proportional-Druckventil (15) angeordnet ist.

5. Betätigungsanordnung nach Anspruch 3 oder 4, dadurch gekennzeichnet, daß am Arbeitszylinder (1) ein Wegaufnehmer (21) angeordnet ist, dessen Meßsignal der Steuereinrichtung (16) zugeführt ist.

6. Betätigungsanordnung nach einem oder mehreren der Ansprüche 3 bis 5 dadurch gekennzeichnet, daß das Proportional-Druckventil (15) stromlos geschlossen ist.
